Europäisches Patentamt

European Patent Office

Office européen des brevets

(11) Veröffentlichungsnummer: **0 079 452**
**B1**

(12) **EUROPÄISCHE PATENTSCHRIFT**

(45) Veröffentlichungstag der Patentschrift:
22.05.85

(21) Anmeldenummer: 82109059.4

(22) Anmeldetag: 30.09.82

(51) Int. Cl.⁴: **F 24 J 3/00,** F 24 D 11/00,
F 24 D 11/02

(54) Energiespeicher zur Speicherung von latenter Wärme in chemisch reagierenden Speichermedien oder Speichermedien mit Phasenwechsel.

(30) Priorität: 04.11.81 DE 3143771
15.12.81 DE 3149660

(43) Veröffentlichungstag der Anmeldung:
25.05.83 Patentblatt 83/21

(45) Bekanntmachung des Hinweises auf die Patenterteilung:
22.05.85 Patentblatt 85/21

(84) Benannte Vertragsstaaten:
AT BE CH DE FR GB IT LI LU NL SE

(56) Entgegenhaltungen:
WO - A - 80/01509
DE - A - 2 916 514

(73) Patentinhaber: Laumen, Michael, Am Brustert 47,
D-4150 Krefeld-Hüls (DE)

(72) Erfinder: Laumen, Michael, Am Brustert 47,
D-4150 Krefeld-Hüls (DE)

(74) Vertreter: KUHNEN & WACKER Patentanwaltsbüro,
Schneggstrasse 3-5 Postfach 1729, D-8050 Freising (DE)

ACTORUM AG

## Beschreibung

Die Erfindung betrifft einen Energiespeicher zur Speicherung von latenter Wärme in chemisch reagierenden Speichermedien oder Speichermedien mit Phasenwechsel gemäss dem Oberbegriff des Anspruchs 1.

Energiespeicher sind für alle Prozesse von Bedeutung, bei denen Energieangebot und Energieverbrauch zeitlich differieren.

Weiter sind Speicher dort sinnvoll einzusetzen, wo Spitzenlasten die Grösse einer Energieversorgungseinheit, beispielsweise einer Heizungsanlage, bestimmen. Hier kann ein Speicher dazu dienen, die Energieversorgungseinheit auf die Grösse der durchschnittlichen Leistung zu reduzieren. Dies ist vor allen Dingen für anschlussgebundene Versorgungseinheiten, z. B. elektrische Wärmepumpen, von Bedeutung.

Anzustreben ist ein Speicher, der beide Anforderungen erfüllen kann und dadurch universell einsetzbar ist.

Ein zeitlich versetztes Energieangebot aus der Umwelt (Sommer) und Energieverbrauch (Winter) tritt insbesondere bei der Beheizung von Gebäuden sowohl jahreszeitlich als auch tagesverlaufabhängig auf. Bei der noch weitgehend üblichen Heizung mit Kohle oder Öl sind die Vorräte sowohl Energieträger als auch Energiespeicher, und die erforderliche Heizenergie kann daraus je nach erforderlichem Verbrauch entnommen werden. Erst durch die steigenden Preise für Öl und Kohle und die Erkenntnis, dass die Vorräte weltweit begrenzt sind und zur Neige gehen, fand wieder eine Rückbesinnung auf im Prinzip bekannte Einrichtungen in Energieversorgungsanlagen wie Sonnenkollektoren, Wärmepumpen usw., statt, die eine Verwertung der „kostenlosen" Umweltenergie gestatten. Da aber das grösste Energieangebot aus der Umwelt gerade dann auftritt, wenn keine (Sommer) oder wenig (Wärmeperiode im Winter) Heizenergie erforderlich ist, könnte durch eine Wärmespeicherung eine erhebliche Verbesserung des Wirkungsgrads einer Versorgungsanlage und eine Reduzierung der Grösse erfolgen. Der maximale Bedarf an Heizenergie ist nur bei extrem tiefen Temperaturen wenige Stunden im Jahr erforderlich und die in der DIN 4701 vorgeschriebenen Werte zur Errechnung des maximalen Wärmebedarfs werden sogar oft nur innerhalb eines Jahrzehnts für wenige Stunden erreicht. Der an sich hier naheliegende Einsatz von Energiespeichern wurde meist wegen zu hoher Investitions- und Betriebskosten unterlassen. Unwirtschaftlich sind Speicher dann, wenn sich aus der Summe von Investitions- und Betriebskosten kein wirtschaftlicher Vorteil gegenüber Versorgungsalternativen errechnen lässt.

Die wesentlichen beiden Forderungen an einen Energiespeicher sind:

a) Ein Energiespeicher sollte möglichst verlustfrei arbeiten. Hier sind nicht nur Verluste durch Wärmetransmission, sondern auch Energieaufwand zur Aufrechterhaltung des Speicherbetriebs und exergetische Verluste, beispielsweise in Wärmetauschern, gemeint. Indirekt resultiert aus dieser Forderung, dass die Speichertemperatur der für den jeweils gewünschten Prozess notwendigen Temperatur angepasst werden sollte. Dieser Punkt ist das exergetische Minimum. Durch eine Anpassung verbilligt sich die Bereitstellung und die Verluste werden reduziert.

b) Im Speichermedium sollte möglichst viel Energie speicherbar sein, d. h. eine möglichst hohe Energiedichte erreichbar sein. Diese Forderung kann nach bisherigen Erkenntnissen für be- und entladbare Speicher durch die Speicherung latenter Wärmen erfüllt werden. Die Wahl der Speichermedien und der Betrieb der Speichereinrichtung darf dabei jedoch keinen Aufwand verursachen, der den Betrieb gegenüber anderen Versorgungsalternativen unwirtschaftlich macht.

Alle bisher bekannten Speichersysteme erfüllen die vorgenannten Forderungen nur sehr unvollkommen, so dass sich bisher kein System auf dem Markt durchsetzen konnte, obwohl gerade Versorgungseinheiten wie Wärmepumpen, Kollektoren, Absorber sowie Wärme/Kraft-Kopplungen in ihrem Wirkungsgrad verbessert werden. Diese Verbesserung betrifft sowohl den rein technischen Wirkungsgrad als auch den Nutzungsgrad der eingesetzten Primärenergie.

Zur Zeit bekannte nutzbare Speichermedien, insbesondere für Gebäudeheizungen, sind Wasser, Salzhydrate und reziproke Salzpaare. Ein Vergleich dieser Speichermedien zeigt, dass die Energiedichte in reziproken Salzpaaren am grössten ist, wobei z. Z. ca. 500 Systeme reziproker Salzpaare bekannt sind.

Bei einem Exergiepunkt für alle Systeme von 35° C beträgt die Energiedichte für:

| | $(kJ/dm^3)$ |
|---|---|
| Steine, Schamotte | 42 |
| Wasser $\Delta t$ 25° C | 105 |
| Glaubersalz oder ähnliche Salzhydrate | 375 |
| Reziprokes Salzpaar System 1 | 630 |
| Reziprokes Salzpaar System 2 | 720 |

Bei einer anergetischen Speicherung ergeben sich Energiedichten von:

| | $(kJ/dm^3)$ |
|---|---|
| Eisspeicher | 390 |
| Reziprokes Salzpaar System 3 | 1560 |

Die anergetische Speicherung, beispielsweise unter der für eine Fussbodenheizung notwendigen Mindesttemperatur von 35° C, kann aber nicht direkt mit der exergetischen Speicherung verglichen werden, da hier andere Anlagenkonstellationen notwendig sind und die gespeicherte Energie, beispielsweise durch eine Wärmepumpe, auf ein höheres Temperaturniveau angehoben werden muss.

Unter Zugrundelegung der vorgenannten Energiedichten und davon ausgehend, dass es für die vorgenannten Speichermedien (noch nicht bekannte) problemlose Speicheranlagen gibt, ergeben sich für einen geeigneten Speicher für ein Einfamilienhaus folgende Daten:

Bei einem Einfamilienhaus mit Qh max. 14 kW, Fläche 160 m², Qspez. 80 W/m² ergibt sich nach VDI 2067 ein Jahreswärmebedarf von 85,7 GJ/a oder 23 800 kWh/a. Wenn dieses Einfamilienhaus mit Kollektoren und einem Speicher ausgerüstet ist, kann von einer langfristig zu speichernden Wärmemenge von ca. 43 GJ ausgegangen werden. Bei Wasser als Speichermedium ist weiterhin ein 20%iger Verlust durch Transmissionen zu veranschlagen, so dass hier ca. 52 000 kWh/a gespeichert werden müssten.

Hieraus errechnen sich die nachfolgenden Speicherkubaturen:

|  | (m³) |
| --- | --- |
| Wasser | 495 |
| Salzhydrat | 115 |
| Reziprokes Salzpaar | 59 |

Bei der Ausrüstung dieses Hauses mit Kollektoren und einer zusätzlichen Wärmepumpe sinkt die langfristig zu speichernde Energiemenge auf Grund der verbesserten Wärmeausbeute, d. h. die Kollektoren können auch noch bei relativ tiefen Temperaturen als Energiesammler betrieben werden, auf ca. 13 GJ. (Dabei wurde von einer Kollektorfläche von ca. 100 m² ausgegangen.) Bei einer solchen Anlage errechnet sich die Kubatur der zu vergleichenden Speicher auf:

|  | (m³) |
| --- | --- |
| Wasser | 148 |
| Salzhydrat | 34 |
| Reziprokes Salzpaar | 18 |

Bei einer Lagerung auf anergetischem Niveau, beispielsweise bei einer Reaktionstemperatur von 20° C eines Salzsystems 3, kann das Speichervolumen auf ca. 8,5 m³ weiter reduziert werden. Bei diesem Temperaturniveau besteht normalerweise die Möglichkeit zur Nachladung. Eine Nachladung über Kollektoren ist bis −10° C unproblematisch, so dass unter dieser Voraussetzung ein Speichervolumen von 5 bis 6 m³ ausreicht. Durch die niedrige Arbeitstemperatur verbessert sich auch die Energieausbeute der Kollektoren hinsichtlich des Wirkungs- und Nutzungsgrades. Zur Anhebung der Temperatur auf beispielsweise 35° C (Fussbodenheizung) im beschriebenen Beispiel kann eine Wärmepumpe eingesetzt werden, die dann mit einer konstanten Lieferziffer von 9 und besser arbeitet. Unter Lieferziffer wird hier das Verhältnis zwischen der Arbeitsenergie, die in die Wärmepumpe gesteckt wird, und der „gewonnenen" Exergiemenge bezeichnet. Ein Eisspeicher ermöglicht hingegen nur eine Lieferziffer von etwa 3,5, was einen weniger wirtschaftlichen Betrieb bedeutet.

Es konnte hier somit gezeigt werden, dass, insbesondere bei der Verwendung von reziproken Salzpaaren, für eine Langzeitspeicherung zum Ausgleich des Energieangebots in warmen Jahreszeiten und des hohen Energieverbrauchs im Winter nur mehr relativ kleine und praktisch realisierbare Speichergrössen erforderlich sind. Für das gezeigte Beispiel ergibt sich für die erforderliche Wärmepumpe eine ebenfalls praktisch realisierbare Anschlussleistung von maximal 1,6 kW/h.

Ein weiterer Einsatzbereich eines Energiespeichers ist der eines Tagesausgleichsspeichers. Hier soll nicht eine jahreszeitliche langfristige Energiespeicherung vorgenommen werden. Es soll vielmehr in einer Wärmepumpenanlage, beispielsweise mit Solarkollektoren, die Wärmepumpe, insbesondere die Kompressorleistung, auf durchschnittlich anfallende Werte angepasst und reduziert werden. Ungünstige Tagesgänge sollen durch den Tagesausgleichsspeicher sowohl bei tageszeitlichen Temperaturschwankungen als auch bei mehrtägigen Temperaturschwankungen aufgefangen werden. Die Reduzierung der Wärmepumpengrösse und damit der Anschlussleistung ist von der Speichergrösse abhängig. Eine Auslegung auf 50% der maximalen stündlichen Heizleistung ist realistisch, so dass für eine Wärmepumpenanlage mit normalerweise 1,6 kW/h nur noch eine Anschlussleistung von ca. 0,8 kW/h notwendig wäre. Bei diesem Beispiel müsste ein Tagesausgleichsspeicher von ca. 2 m³ Speicherinhalt auf exergetischem Niveau eingesetzt werden. Bei einer solchen Auslegung könnte der Betrieb ohne Zusatzheizung auch für den Fall aufrechterhalten werden, dass der maximale Tagesgang 100 h anhält. Ein erhöhtes Sicherheitsbedürfnis nach einer noch sichereren Heizungsanlage kann durch einen grösseren Speicher, einen grösseren Kompressor oder eine Zusatzheizung befriedigt werden.

Ein weiteres wichtiges Anwendungsgebiet eines exergetischen Speichers wird im Verbund mit zentralen Wärmeversorgungssystemen gesehen. Die beim Betrieb von Kraftwerken anfallende Abwärme könnte unabhängig vom Bedarf in ein Verbundnetz eingespeist werden. Das Kraftwerk könnte dabei ohne Rücksicht auf den jeweiligen Wärmeverbrauch ausschliesslich am Stromverbrauch orientiert gefahren werden. Beim Einsatz von Speichern wäre auch hier eine Reduzierung der Dimensionierung des Verbundnetzes und ein Ausgleich von Energieangebot und Energieverbrauch möglich. Der Wärmetauscher Speicher/ Heizungsanlage ist dazu auf die maximale Last auszulegen.

Mit den vorgenannten Speichermedien, Wasser, Salzhydrate und reziproke Salzpaare, wurde bereits mehrfach versucht, praktisch nutzbare Ausführungen von Speichern aufzubauen.

Bei Wasserenergiespeichern mit Wasser als Speichermedium werden üblicherweise drucklose, isolierte Behälter verwendet. Die notwendige Isolierstärke wird um so grösser, je länger die Speicherzeit sein soll. Bei einer Langzeitspeicherung können Isolierstärken von 1,5 m notwendig werden. Die erforderlichen grossen Behälter und Isolierstärken sind teuer und lassen sich in der Regel, zumindest in bereits bestehenden Gebäuden, nicht unterbringen. Nachteilig wirkt sich auch die Verschlechterung des Wärmeaustausches bei der Entladung durch die sinkende Speichertemperatur aus, da die Temperaturdifferenz zwischen dem sich abkühlenden Wasser und dem aufnehmenden Kreislauf, beispielsweise einem Heizkreislauf, ständig kleiner wird.

· Wenn Hydrate, wie Glaubersalz oder Paraffine, als Speichermedium zur Speicherung latenter Wärmen verwendet werden, muss eine mechanische Mischeinrichtung vorgesehen werden, um ein Ausfallen von Kristallen zu unterbinden. Mechanisch bewegte Rührwerke benötigen zum einen wiederum Energie und sind zum andern einem Verschleiss unterworfen, der durch die meist sehr aggressiven Speichermedien noch gefördert wird. Der Wärmeaustausch findet bei bekannten Ausführungen dieser Art über einen Wärmetauscher im Speichermedium statt. Dabei treten beim Auskühlen des Speichers feste Salzkristalle an der Tauscherfläche auf, was zu einem schlechten Wärmeübergang führt. Dies bedingt notwendigerweise bei der Be- und Entladung eine Über- bzw. Untertemperatur des Wärmeträgermittels, damit der Wärmeleitwiderstand des den Wärmetauscher umgebenden Materials überwunden wird. Übertemperaturen können zu unerwünschten, irreversiblen Zustandsänderungen im Speichermaterial führen, die im Laufe der Zeit den Speicher unbrauchbar werden lassen.

Es ist bekannt (DE-OS Nr. 2846230), einen Latentwärmespeicher ohne Rühr- und Mischeinrichtung aufzubauen und eine Verfestigung des Wärmespeichermediums, insbesondere bei Glaubersalz, zuzulassen. Die Be- und Entladung dieses Speichers erfolgt durch ein Wärmeträgermittel, insbesondere Öl, das an das Speichermedium sensible Wärme bei der Beladung abgibt oder sensible Wärme bei der Entladung aufnimmt. Das Wärmetauschermedium wird dann, wenn das Wärmespeichermedium in der flüssigen Phase ist, unmittelbar durch das Wärmespeichermedium geleitet, so dass die Aufnahme bzw. Abgabe von sensibler Wärme auf das Wärmetauschermedium in unmittelbarem Kontakt von Wärmetauscherflüssigkeit und Wärmespeicherflüssigkeit erfolgt. Insbesondere für den Fall, dass Glaubersalz als Wärmespeichermedium verwendet wird, verfestigt sich dieses beim Phasenwechsel und verstopft somit das Einleitungsrohr für das Wärmetauschermedium. Um dagegen Abhilfe zu schaffen, ist eine Einrichtung zur Schaffung kanalförmiger Hohlräume in dem sich verfestigenden Wärmespeichermedium vorgeschlagen, so dass durch diese Hohlräume auch bei festem Wärmespeichermedium Wärmetauschermedium gepumpt werden kann. Der Wegfall einer Durchmischungseinrichtung, die ein dichtes Zusammenbacken des Wärmespeichermediums verhindern könnte, wird hier durch ein aufwendiges Verfahren zum Herstellen von kanalförmigen Hohlräumen ersetzt, das zudem in Abhängigkeit des Verfestigungsgrades des Wärmespeichermediums gesteuert werden muss. Ein enormer Nachteil besteht darin, dass bei verfestigtem Wärmespeichermedium nur geringe Kontaktflächen zwischen diesem und dem Wärmetauschermedium entlang den kanalförmigen Hohlräumen auftreten, so dass ein nur geringer Wärmeübergang besonders von weitab von den Hohlräumen liegenden Bereichen des Wärmespeichermediums möglich ist. Um einen praktisch nutzbaren Energiespeicher zu erhalten, wird daher mit im Vergleich zur Reaktionstemperatur des Speichermediums grossen Über- bzw. Untertemperaturen gearbeitet werden müssen, um einen praktisch nutzbaren Wärmeübergang von dem Wärmespeichermedium zum Wärmetauschermedium zu erhalten, wodurch die oben beschriebenen irreversiblen Prozesse ausgelöst werden können. Ein weiterer Nachteil des bekannten Energiespeichers liegt darin, dass für die Wärmeübertragung zum und vom Speicher ein hoher Massenfluss an Wärmetauschermedium erforderlich ist, da vom Wärmetauschermedium nur sensible Wärme abgegeben bzw. aufgenommen wird. In Anspruch 1 wurde von dem vorbeschriebenen Energiespeicher ausgegangen.

Weiter ist es bekannt, in Energiespeichern das Speichermedium in vorzugsweise Kugelform zu kapseln. Die Be- und Entladung eines solchen Speichers geschieht dadurch, dass ein Wärmeträgermittel an den gekapselten Speichermediumkugeln vorbeigeleitet wird. Eine Verkrustung eines Wärmeaustauschers tritt durch die Kapselung des Speichermediums nicht auf, nachteilig ist jedoch das aufwendige Verfahren, ein grosses erforderliches Speichervolumen durch die Schaffung von Zwischenräumen zwischen den einzelnen Kapseln und eine Verschlechterung des Wärmeübergangs durch die Kapsel um das Speichermedium.

Ein mit gekapseltem Speichermedium arbeitender Energiespeicher ist beispielsweise aus der US-PS Nr. 4192144 bekannt. Dieser Speicher wird so geladen, dass überhitzter Dampf von oben her in die dichte Packung von Speichermediumkapseln geleitet wird. Unter Abgabe von sensibler und latenter Wärme kondensiert der Dampf, und das Kondensat sammelt sich im unteren Bereich des Energiespeicherbehälters. Das Niveau des Kondensatspiegels ist durch eine steuerbare Einrichtung veränderbar, wodurch eine von oben nach unten schichtförmige Aufladung dieses Energiespeichers möglich wird. Bei der Entladung dieses Energiespeichers wird der Flüssigkeitsspiegel in einen geladenen Bereich des Energiespeichers angehoben, wobei die Wärmeträgerflüssigkeit verdampft und zur Weiterverwendung, insbesondere zum Betrieb einer Turbine, zur Verfügung steht. Aufgabe des hier gezeigten Energiespeichers ist es, eine gezielte schichtweise Be- und Entladung für eine steuerbare Entladung des Speichers zu ermöglichen. Dazu ist es erforderlich, die Anlage über den Füllstand des Wärmeträgermittelkondensats zu steuern, wobei eine Durchmischung geladener und nichtgeladener Speicherkapseln durch eine dichte Packung verhindert werden muss. Durch die Art der Be- und Entladung ist eine getrennte Lagerung von Wärmeträgerkondensat und eine Dosiereinrichtung für die Füllung des Speichers notwendig, die in Verbindung mit der für die Funktion notwendigen Kapselung des Speichermediums zu einem sehr aufwendigen Energiespeicher führt. Da hier gerade keine Durch- und Umströmung der Speichermediumkapseln oder eine Durchmischung der Speichermediumkapseln vorgesehen ist, sondern das Speichermedium schichtweise mit Wärmeträgerdampf beaufschlagt wird, kann keine effektive Beladung erwartet werden, so dass die Anwendung im wesentlichen auf den aufgezeigten Fall in Verbindung mit einer Turbine begrenzt sein dürfte. Daraus ergibt sich auch, dass die im Wärmeträgermedium gespeicherte latente Wärme von untergeordneter Bedeutung ist, da für den Betrieb der Turbine stark überhitzter Dampf erforderlich ist.

Weiter ist es bekannt (US-PS Nr. 4238296), von einer wärmeren Flüssigkeit (Frischwasser) mit Hilfe eines Kohlenwasserstoffkreislaufs Wärme auf eine kältere Flüssigkeit (Meerwasser) zu übertragen, um das Meerwasser für eine nachgeschaltete Entsalzung vorzuwärmen. Zur Wärmeübertragung wird dabei die durch Verdampfung gespeicherte latente Verdampfungswärme benutzt. Der hier beschriebene Kreislauf eignet sich jedoch nicht als Wärmeträgermittelkreislauf für einen Wärmespeicher, da in der gezeigten Anordnung ein Kreislaufbetrieb nur in einer Richtung möglich ist und keine Umkehr der Kreislaufrichtung, wie sie für den Be- und Entladebetrieb eines Speichers erforderlich ist, durchgeführt werden kann.

Weiter ist es bekannt („Latent Heat Energy Storage Using Direct Contact Heat Transfer", Proc. of the Int. Sol. Energy Soc. Silver Jubilee Congr., Atlanta), bei einem Latentwärmespeicher das Be- und Entladen durch einen direkten Kontakt zwischen Speichermedium und einem Wärmetransportmedium durchzuführen. Hierbei wird durch eine wässerige Salzlösung (Wärmespeichermedium) eine Wärmeträgerflüssigkeit geleitet, die eine geringere Dichte aufweist als die wässerige Salzlösung und mit dieser nicht mischbar ist. Die Einleitung der Wärmeträgerflüssigkeit erfolgt durch einen Diffusor von unten her in die Salzlösung, so dass die Wärmeträgerflüssigkeit in der Salzlösung in Tröpfchenform aufsteigt, Wärme abgibt bzw. aufnimmt und sich an der Oberfläche der Salzlösung sammelt. Von dort wird die Wärmeträgerflüssigkeit abgepumpt, über einen Wärmetauscher geführt und anschliessend wieder von unten her in die Salzlösung eingebracht. Dieser Kreislauf wird somit mit Hilfe einer Pumpe aufrechterhalten und der Wärmeaustausch erfolgt durch Abgabe bzw. Aufnahme von sensibler Wärme im Wärmeträgermittel. Der hier beschriebene Energiespeicher entspricht somit im wesentlichen der weiter oben beschriebenen Einrichtung (DE-OS Nr. 2846230), wobei lediglich kein sich verfestigendes Speichermedium verwendet wird.

Schliesslich ist aus der EP-A Nr. 0034164 ein Energiespeicher zur Speicherung latenter Wärme nach dem Oberbegriff des Anspruches 1 bekannt, bei dem in einem z. T. evakuierten Behälter ein Speichermedium und ein Wärmeträgermedium eingebracht sind. Zusätzlich sind im unteren Bereich des Speicherbehälters ein Wärmetauscher zum Zuführen von Wärme und im oberen Bereich ein Kondensator zum Abführen von Wärme eingebaut. Wesentliches Merkmal dieses Energiespeichers ist, dass die Dichte des Wärmeträgermittels grösser ist als die Dichte des flüssigen Speichermediums und kleiner als die Dichte des festen Speichermediums. Ein Be- und Entladezyklus, bei dem gemäss dem beschriebenen Ausführungsbeispiel $CaCl_2 \cdot 6 H_2O$ als Speichermedium und Frigen 113 als Wärmeträgermedium in einem Mengenverhältnis von 50 kg $CaCl_2 \cdot 6 H_2O$ zu 2 l Frigen 113 verwendet werden, stellt sich wie folgt dar:

In entladenem Zustand befindet sich im Speicher das durch das Frigen angefeuchtete Salz. Durch Wärmezufuhr über den im unteren Bereich des Speichers eingebauten und damit in den Bereich des Speichermediums hineinragenden Wärmetauscher wird von aussen Wärme zugeführt. Diese Wärme mit einer Temperatur über der Reaktionstemperatur des Speichers verdampft einerseits das sich im Salz befindende Frigen, das in kühlere Salzschichten hochsteigt und in diesen kühleren Salzschichten z. T. kondensiert, wobei die freiwerdende Kondensationswärme einen kleinen Teil des Salzes schmilzt, und ein Teil des dampfförmigen Frigen zur Dampfdruckerhöhung in den Bereich über dem z. T. flüssigen und z. T. noch festen Speichermedium gelangt. Ein Teil der zugeführten Wärme wird durch direkten Wärmeübergang von dem Wärmetauscher auf das feste Salz unmittelbar zum Schmelzen des Salzes verwendet. Dieser Anteil der zugeführten Wärme erhöht sich immer mehr, da das in unmittelbare Umgebung des Wärmetauschers befindliche Frigen als erstes verdampft und flüssiges, wiederkondensiertes Frigen nicht mehr in unmittelbare Nähe des Wärmetauschers gelangt, so dass zu diesem wieder flüssig gewordenen Frigen die zugeführte Wärme nur noch mittelbar, d. h. über das erwärmte Speichermedium, zugeführt werden kann. Da Wärmeübertragung durch Wärmeleitung im Gegensatz zur Verdampfung und Kondensation eines Hilfsmediums ein sehr langsamer physikalischer Prozess ist, muss von aussen Wärme mit einer Temperatur zugeführt werden, die erheblich über der Schmelztemperatur des als Speichermedium verwendeten Salzes liegt, um die Beladung des Speichers in einem anwendungstechnisch sinnvollen Zeitraum durchführen zu können. Daraus ergibt sich als wesentlicher Nachteil, das aufgrund der notwendigen Übertemperatur der zugeführten Wärme das Salz homogen und vollständig schmilzt und keine Mikrokristalle zurückbleiben, die im nachfolgenden Entladevorgang als Kristallisationskeime dienen würden.

Ist schliesslich alles Salz geschmolzen, dann ergibt sich aufgrund der obengenannten Dichteverhältnisse eine Schichtung, bei der sich die flüssige Salzschmelze über dem flüssigen Frigen befindet. Über der Flüssigkeit befindet sich hauptsächlich dampfförmiges Frigen mit einem Dampfdruck, der durch die Temperatur des beladenen Speichers gegeben ist. Durch Beaufschlagen des Kondensators mit kaltem Wasser kondensiert das dampfförmige Frigen über der Flüssigkeit, wodurch der Druck im Speicherbehälter abgesenkt wird. Damit das flüssige Frigen im Speicherbehälter verdampfen kann, muss die Druckabsenkung, die durch die Zulauftemperatur des Wassers zum Kondensator gegeben ist, so gross sein, dass auch der hydrostatische Druck der über dem flüssigen Frigen befindlichen Salzschmelze überwunden wird. Damit vergrössert sich der Temperaturunterschied zwischen der Temperatur, bei der die Wärme zugeführt wird, und der Temperatur, bei der die Wärme aus dem Speicher wieder abgeführt wird, d. h. der exergetische Wirkungsgrad des Speichers verschlechtert sich drastisch.

Ist im Speicherbehälter der Druck schliesslich genügend abgesenkt worden, dann beginnt das Frigen zu verdampfen. Die dazu nötige Wärme entnimmt es der Salzschmelze, wodurch diese, soweit keine Unterkühlungseffekte auftreten, z. T. kristallisiert. Aufgrund der zuvor beim Beladen geschilderten Vorgänge sind in der Schmelze kaum Mikrokristalle vorhanden, so dass auf jeden Fall Unterkühlungseffekte zu erwarten sind. Die Schmelze kühlt sich somit ab, ohne auszukristallisieren, so dass zwangsläufig die Temperatur absinkt, bei der die Wärme entnommen werden kann. Die oben erläuterte Temperaturspreizung zwischen Be- und Entladung des Speichers vergrössert sich dadurch noch mehr. Beginnt die unterkühlte Schmelze an den wenigen vorhandenen Kristallisationskeimen schliesslich doch auszukristallisieren, dann bilden sich sehr grosse Salzkristalle aus, sinken auf den Boden des Behälters ab und verbacken dort.

Das am Kondensator in flüssiger Form anfallende Frigen tropft wieder auf die Salzschmelze zurück. Da die Salzschmelze eine höhere Temperatur aufweist als die Oberfläche des Kondensators, verdampft dabei das flüssige Frigen, und zwar im Hinblick auf die zwangsläufig sehr geringen Dichteunterschiede praktisch an der Oberfläche der Salzschmelze. Die dazu nötige Verdampfungswärme wird aus den oberen Schichten der Salzschmelze entnommen, wodurch sich eine praktisch geschlossene Salzschicht ausbilden kann, die den Entladevorgang des Speichers, wenn nicht völlig unterbricht, so doch zumindest empfindlich stört.

Ist schliesslich der Entladevorgang beendet, dann liegt nicht der Anfangszustand mit feingranuliertem Salz vor, sondern ein Salzstock, der die darüberliegende Schicht aus flüssigem Frigen abstützt. Damit wird beim zweiten Beladen des Speichers und allen nachfolgenden Beladevorgängen die Schmelzwärme nicht durch verdampfendes und wiederkondensierendes Frigen auf das Salz übertragen, sondern durch unmittelbaren Wärmeübergang von dem Wärmetauscher auf das feste Salz. Der oben geschilderte Nachteil, Wärme mit höherer Temperatur zuführen zu müssen, tritt somit während des ganzen Beladevorganges auf, wodurch sich wiederum die Temperaturspreizung zwischen zugeführter und entzogener Wärme vergrössert.

Aufgabe der Erfindung ist es daher, einen Energiespeicher nach dem Oberbegriff des Anspruchs 1 zu schaffen, bei dem auch nach einer Mehrzahl von Be- und Entladezyklen keine Salzstockbildung auftritt und bei dem unter allen Betriebsbedingungen eine geringe Temperaturspreizung zwischen zu- und abgeführter Wärme ermöglicht wird.

Diese Aufgabe wird bei einem gattungsgemässen Energiespeicher mit den kennzeichnenden Merkmalen des Anspruches 1 gelöst.

Gemäss Anspruch 1 soll das Speichermedium von einem Dispersionsmittel durchströmt werden, dessen Verdampfungstemperatur kleiner oder gleich der Reaktionstemperatur des Speichermediums ist. Zudem soll das Dispersionsmittel mit dem Speichermedium nicht chemisch reagieren. Unter Dispersionsmittel wird hier eine Flüssigkeit verstanden, mit deren Hilfe eine Mischung aus Flüssigkeit und darin verteilten Feststoffen hergestellt werden kann, wobei die Feststoffe hier reziproke Salzpaare oder andere, sich bei Phasenwechsel verfestigende Substanzen sein können. Mit der vorgeschlagenen Anordnung wird erreicht, dass über das Dispersionsmittel ein direkter inniger Wärmeaustausch mit dem Speichermedium ohne exergetische Verluste stattfindet. Der Wärmetransport wird sowohl durch das Kondensat als auch durch den an vielen Stellen in feiner Verteilung entstehenden Dampf des Dispersionsmittels und der dadurch gespeicherten latenten Wärme bewirkt. Der Wärmeaustausch zwischen Speichermedium und Dispersionsmittel ist durch die unmittelbare Durchspülung und Durchströmung des im Dispersionsmittel verteilten Speichermediums sehr gut. Zudem sorgt das durchströmende Dispersionsmittel für Bewegung im Speichermaterial, so dass das wärmeführende Dispersionsmittel mit allen Speichermediumpartikeln zur Be- und Entladung Kontakt findet. Zusätzlich wird dabei, insbesondere durch die in feiner Verteilung im Speichermedium entstehenden Dampfblasen des Dispersionsmittels, ein Verklumpen des Speichermediums weitgehend vermieden. Bei der Entladung des Speichers wird sich daher kein Speichermediumblock bilden, der den Wärmeübergang und damit die Funktion des gesamten Speichers bei einer anschliessenden Beladung behindert, sondern das Speichermedium wird in einem schüttfähigen bzw. körnigen Zustand gehalten, der jederzeit ein Durchleiten von Dispersionsmittel bei grosser Kontaktfläche erlaubt. Insgesamt gesehen kann dadurch eine mechanische Durchmischungseinrichtung entfallen. Der Verdampfungsdruck des Dispersionsmittels kann zur Aufrechterhaltung eines Dispersionsmittelkreislaufs verwendet werden in der Art, dass das im geladenen Speicher ausdampfende Dispersionsmittel dazu genutzt wird, das in einem Wärmetauscher abgekühlte (flüssige) Dispersionsmittel wieder durch das Speichermedium zu drücken. Der zur Aufrechterhaltung eines Kreislaufs notwendige Druckunterschied zwischen der Dampfaustrittsstelle und der Kondensateinleitungsstelle im Speichermedium wird sich durch den Strömungswiderstand im Speichermedium selbst einstellen. Es kann jedoch bei entsprechender Dimensionierung und Wahl des Speichermittels und Dispersionsmittels notwendig werden, ein Expansionsventil im Dispersionsmittelkreislauf anzubringen. Es ist somit ein geschlossener, selbstinduzierter Dispersionsmittelkreislauf vorgeschlagen, der das Speichermedium in fluidisierbarer Form hält und das Wärmeträgermittel (Dispersionsmittel) den Wärmetransport sowohl beim Be- als auch beim Entladen des Speichers mit relativ wenig Massefluss über latente Wärmen unter Ausnützung eines Phasenwechsels durchführt. Wesentlich ist dabei, dass bei einem Wärmetransport mit latenter Wärme mit Temperaturen in der gesamten Anlage gearbeitet werden kann, die in der Grösse der Reaktionstemperatur des Speichermediums liegen. Dadurch entfällt vorteilhaft die Notwendigkeit für hohe Über- bzw. Untertemperaturen, die viele Speichermedien nicht vertragen und die zu irreversiblen Prozessen führen. Die gesamte Anlage kann dabei sehr einfach über den Anlagendruck gesteuert werden.

Ein weiterer wesentlicher Vorteil des vorgeschlagenen Energiespeichers liegt darin, dass der Wärmetransfer vom Dispersionsmittel zum Speichermedium sowohl über die kondensierte Phase des Dispersionsmittels, wobei ein sehr guter Wärmeübergang zum Speichermedium erreicht wird, und über die Gasphase, wobei eine sehr innige Durchmischung erreicht wird, erfolgt. Zum Anlaufen des Speichers bei der Beladung ist der beschriebene Dispersionsmittelkreislauf über eine kondensierte Phase und eine Gasphase nicht erforderlich, da der Energiespeicher durch Konvektion des kondensierten Dispersionsmittels anlaufen kann und somit keine zusätzlichen Anlaufhilfsmittel benötigt.

Ein weiterer Vorteil wird darin gesehen, dass ein geschlossenes System bestehend aus Dispersionsmittel und Speichermedium enthalten wird und keine Trennung dieser beiden Medien bei irgendwelchen Betriebszuständen notwendig ist. Dadurch und durch den Wegfall von mechanischen Durchmischungs- und Pumpeinrichtungen ist der aufgezeigte Energiespeicher praktisch wartungsfrei.

Zwar ist aus der DE-A Nr. 2916514 ein Latentwärmespeicher bekannt, bei dem das Speichermedium in einem fluidisierten Zustand gehalten wird, um ein dauerndes Überstreichen der Wärmetauschfläche durch das Wärmespeichermedium zum Zwecke des Wärmetauschs zu gewährleisten. Das Dispersionsmittel erfüllt dabei keine Wärmeübertragungsfunktion und kann demzufolge jedes beliebige, gegenüber dem Speichermedium inerte Medium wie etwa auch Gas sein. Das Dispersionsmittel wird von unten her in das spezifisch schwerere Speichermedium eingedrückt und steigt im Speichermedium auf, wonach es von der Oberseite des Speichermediums wieder abgezogen und nach unten gepumpt werden kann.

Ähnlich ist es aus der WO-A Nr. 8001509 bekannt, über dem Wärmespeichermedium ein Bad aus flüssigem Öl anzuordnen, dem bei der Beladung Wärme zugeführt und bei der Entladung Wärme entzogen wird, und aus dem Öl in den Bodenbereich des Speichermediums gepumpt und dort in das Speichermedium eingeführt wird. Das gegenüber dem Speichermedium spezifisch leichtere Öl steigt im Speichermedium auf und durchperlt dieses bei gleichzeitigem Übergang der sensiblen Wärme des Öls auf das Speichermedium oder umgekehrt der Latentwärme des Speichermediums auf das Öl zur Erhöhung von dessen sensibler Wärme.

Ein solcher Stand der Technik, bei dem eine Durchperlung des Wärmespeichermediums mit einem geeigneten Inertmedium wie Öl ggf. unter gleichzeitiger Wärmeübertragung auf das Speichermedium erfolgt, ist auch in der WO-A Nr. 8100574 erläutert, von der die Erfindung ausgeht. Dabei wird insbesondere als nachteilig empfunden, dass das flüssige Öl od. dgl., welches nur mit begrenzter Strömungsgeschwindigkeit und damit in begrenztem Massenstrom dem Speichermedium zugeführt werden kann, Wärme nur als sensible Wärme aufnehmen oder abgeben kann, so dass der Wärmetransport auch im Hinblick auf die relativ geringe Wärmekapazität von Öl oder ähnlichen, in Frage kommenden Medien begrenzt ist. Dies erfordert einen erheblichen Temperaturunterschied zwischen dem Wärmeübertragungsmedium in Form von Öl od. dgl. und dem Speichermedium, um überhaupt dem Speichermedium über das Öl eine noch ausreichende Wärmemenge pro Zeiteinheit entziehen oder zuführen zu können. Diese relativ grosse Temperaturdifferenz führt in der Beladephase zu einer Überhitzung des Speichermediums, welches dadurch in dem Sinne vollständig erschmolzen wird, dass keine ausreichende Anzahl von Kristallisationskeimen für die nachfolgende erneute Kristallisation zur Verfügung steht. Im Falle der WO-A Nr. 8001509 ist zur Umgehung dieses Nachteils, der zu einer erheblichen Unterkühlung der Schmelze beim Entladen führen kann, eine Vorrichtung zur Einführung von Kristallkeimen von aussen her in die Schmelze vorgesehen.

Allen diesen bekannten Vorgehensweisen ist gemeinsam, dass durch die Verwendung von Öl od. dgl. als Wärmeträgermittel in ausschliesslich flüssiger Form keine ausreichend homogene und insbesondere ausreichend heftige Durchmischung des Speichermediums insbesondere bei darin befindlichem höheren Feststoffanteil erzielbar ist. Daher muss in jedem Fall trotz der Durchströmung des Speichermediums mit der Bildung von Krusten und Salzstöcken gerechnet werden. Eine Bildung von Salzverkrustungen und Salzstöcken kann nach diesem Stand der Technik schon deswegen nicht vermieden werden, weil die Fähigkeit des infolge der geringeren Dichte tröpfchenförmig aufsteigenden Öls zur Agitation, Homogenisierung und demzufolge Vereinzelung der frisch gebildeten kleinen Kristalle zu gering ist, um deren Agglomeration zu verhindern.

Die Unteransprüche haben vorteilhafte Weiterbildungen der Erfindung zum Inhalt.

Weitere Einzelheiten, Merkmale und Vorteile der Erfindung ergeben sich aus der nachfolgenden Beschreibung anhand der Zeichnung. Es zeigen:

Fig. 1 eine schematische Darstellung einer ersten Ausführungsform eines Energiespeichers mit integriertem Wärmetauscher,

Fig. 2 eine schematische Darstellung einer zweiten Ausführungsform eines Energiespeichers mit integriertem Wärmetauscher,

Fig. 3 ein Fliessschema und eine schematische Darstellung einer dritten Ausführungsform eines Wärmetauschers mit separatem Wärmetauscher in Verbindung mit einem Energieabsorber während der Speicherladung,

Fig. 4 die dritte Ausführungsform gemäss Fig. 3 im Schaltzustand der Speicherentladung,

Fig. 5 eine vierte Ausführungsform mit externem Wärmetauscher, und

Fig. 6 eine fünfte Ausführungsform mit einem integrierten und einem zusätzlichen externen Wärmetauscher.

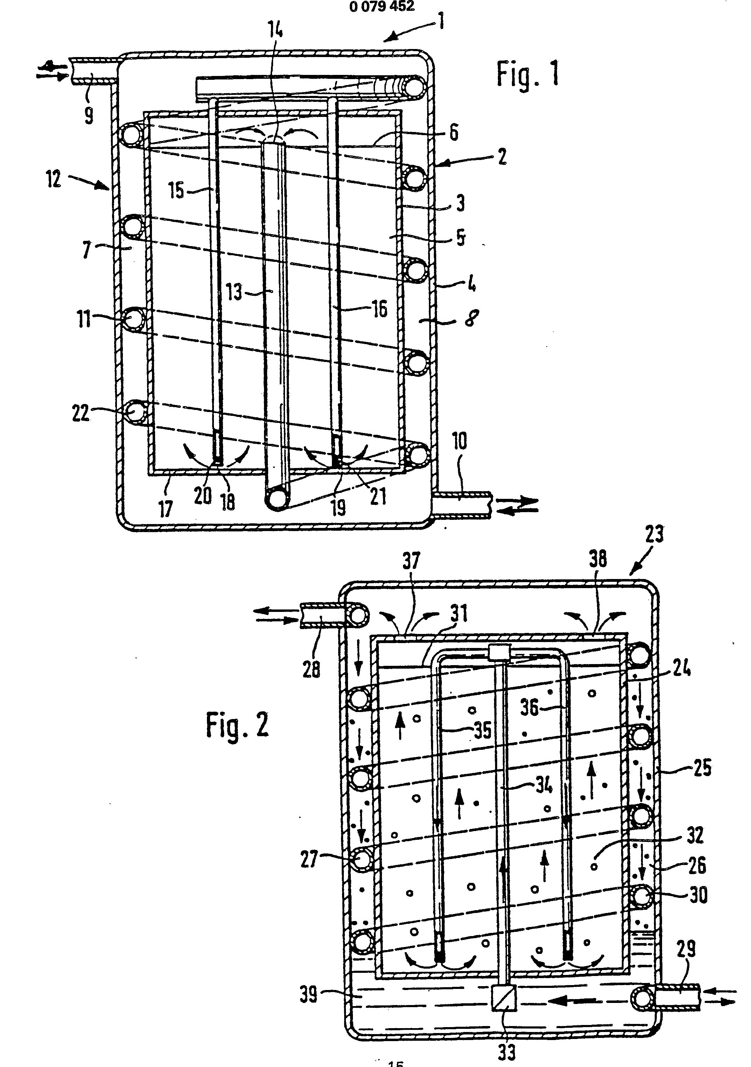

In Fig. 1 ist eine erste Ausführungsform eines Energiespeichers 1 dargestellt, bei dem in einen zweischaligen Behälter 2, bestehend aus einem inneren Behälter 3 und einem äusseren Behälter 4, ein Speichermedium 5 eingebracht ist. Das Speichermedium 5 ist ein chemisch reagierendes Speichermedium oder Speichermedium mit Phasenwechsel, beispielsweise ein Salzhydrat oder reziprokes Salzpaar. Da, wie bereits ausgeführt, bei reziproken Salzpaaren hohe Energiespeicherdichten erzielbar sind, wird vorzugsweise eine Energiespeicherfüllung mit reziproken Salzpaaren vorgeschlagen. Für eine exergetische Speicherung (Hochtemperaturspeicherung) eignet sich beispielsweise das Salzpaar $2 KNO_2 + Ba(OH)_2 \cdot 8 H_2O$, für eine anergetische Speicherung (Niedertemperaturspeicherung) kann das reziproke Salzpaar $2 LiNO_3 \cdot 3 H_2O + (NH_4)_2SO_4$ verwendet werden. Prinzipiell kann jedoch jedes Speichermedium, das zur Speicherung von latenten Wärmen bei einer bestimmten Reaktionstemperatur geeignet ist, eingesetzt werden.

Das Speichermedium 5 ist im inneren geschlossenen Behälter 3 bis zu einem Niveau 6 eingefüllt. Im Zwischenbereich 7, zwischen dem inneren und äusseren Behälter 3, 4, strömt ein Wärmeträgermittel 8, das in einem Anlagenkreislauf, beispielsweise einer Heizungsanlage eines Wohnhauses, zirkuliert. Der Anlagenkreislauf ist über einen oberen Anschluss 9 und einen unteren Anschluss 10 am äusseren Behälter 4 geschlossen.

Im Zwischenbereich 7 ist eine Rohrschlange 11 angeordnet, die sich in vier Windungsebenen von oben nach unten erstreckt und die in Verbindung mit dem vorbeiströmenden Wärmeträgermittel einen Wärmetauscher 12 bildet. Vom unteren Ende der Rohrschlange 11 ausgehend ragt ein Standrohr 13 von unten her dicht in den inneren Behälter so weit, dass eine obere Öffnung 14 über dem Niveau 6 des Speichermediums 5 zu liegen kommt. Vom oberen Ende der Rohrschlange 11 ausgehend sind dicht zwei Tauchrohre 15, 16 von oben her in den inneren Behälter 3 und das Speichermedium 5 bis nahezu an den Boden 17 des inneren Behälters 3 geführt. An unteren Öffnungen 18, 19 der Tauchrohre 15, 16 sind federbelastete Rückschlagventile 20, 21 eingesetzt.

Die Rohrschlange 11, das Standrohr 13, das Speichermedium 5 und die Tauchrohre 15, 16 sind von einem Dispersionsmittel 22 durchströmt, das teils als Dampf, teils als Kondensat auftritt. Das Dispersionsmittel 22 ist ein Wärmeträgermittel, das eine Verdampfungstemperatur haben muss, die kleiner oder maximal gleich der Reaktionstemperatur des Speichermittels 5 ist. Vorzugsweise wird auch bei den kleineren Verdampfungstemperaturen ein Bereich in der Nähe der Reaktionstemperatur angestrebt. Da die Verdampfungstemperatur druckabhängig ist, kann bei bestimmten Kombinationen von Dispersionsmitteln und Salzpaaren die vorgenannte Forderung durch eine Änderung des Drucks (z. B. Überdruckbetrieb) erreicht werden. Das Dispersionsmittel 22 darf zudem nicht mit dem Speichermedium chemisch reagieren, sich in irgendeiner Art anlagern oder sonstwelche Veränderungen durch die Anwesenheit des Speichermediums 5, der Rohrleitungswandungen oder Behälterwandungen erfahren. Es sind daher inerte Stoffe als Dispersionsmittel zu bevorzugen, beispielsweise Freone, die eine hohe Hydrolysebeständigkeit aufweisen sollen.

Da die meisten bekannten Salzhydrate und reziproken Salzpaare chemisch aggressiv sind, wird als Werkstoff für die Teile, die mit dem Speichermedium, jedoch auch mit dem Dispersionsmittel Berührung haben, die Verwendung von Kunststoff empfohlen. Der Behälter 2 kann zudem von einer nicht dargestellten Wärmedämmschicht umgeben sein.

Der Energiespeicher 1 nach Fig. 1 hat folgende Funktion:

*Ladung des Energiespeichers 1:* Für die Ladung des Energiespeichers 1 wird ein Wärmeträger benötigt, der in seiner Temperatur über der Reaktionstemperatur des Speichermediums 5 liegt, damit die Speicherung latenter Wärme bei hoher Energiedichte ausnützbar wird. Es könnte dazu beispielsweise am oberen Anschluss 9 ein Wärmeträgermittel aus einem Energieabsorber, beispielsweise einem Sonnenkollektor, einströmen. Bei noch sehr kaltem Energiespeicher wird sich das Wärmeträgermittel an der Wandung des inneren Behälters und der Rohrschlange 11 abkühlen, damit Wärmeenergie an das Dispersionsmittelkondensat und das Speichermedium abgeben und kälter am unteren Anschluss 10 abfliessen. Dadurch wird sich das Speichermedium 5 bis auf die Reaktionstemperatur (z. B. 35°C) erwärmen. Da das Dispersionsmittel 22 bei der Reaktionstemperatur bereits verdampft, stellt sich der nachfolgend beschriebene Kreislauf ein: In der Nähe des oberen Anschlusses 9, wo das warme Wärmeträgermittel einläuft, verdampft bereits das Dispersionsmittel 22. Durch den hohen Dampfdruck wird das Dispersionsmittel 22 unten aus den Tauchrohren 15, 16 herausgedrückt und durchspült das Speichermedium 5. In der Nähe des gegenüber dem Anschluss 9 kälteren Anschlusses 10 kann dagegen das Dispersionsmittel noch kondensiert sein, so dass hier ein wesentlich geringerer Druck herrscht. Dadurch wird das Dispersionsmittel durch das Standrohr 13 gedrückt und an die Stelle geringeren Drucks geführt. Es bildet sich somit aufgrund des Dampfdrucks ein Kreislauf des Dispersionsmittels aus, der die Energie zu seiner Aufrechterhaltung dem Wärmeträgermittel entnimmt. Wie sich der geschilderte Kreislauf ausbildet, insbesondere mit welcher Zirkulationsgeschwindigkeit, hängt von der Dimensionierung der Durchströmquerschnitte, dem Strömungsquerschnitt in dem gewählten Speichermedium, den Temperaturbedingungen, der Lage der Anschlüsse und der Grösse des Speichervolumens ab. Der Anlauf des Kreislaufs kann bei kondensiertem Dispersionsmittel durch Konvektion erfolgen und ggf. durch eine Hilfspumpe unterstützt werden.

Eine als Expansionsventil wirkende Einschnürung in den durchströmten Querschnitten kann eine Verbesserung des Kreislaufverhaltens erbringen, wenn die für den Anlauf und das Aufrechterhalten des Dispersionsmittelkreislaufs erforderliche Druckdifferenz zwischen wärmeren und kälteren Stellen nicht ausreicht, bzw. der Strömungswiderstand im Speichermedium nicht die erforderliche Druckdifferenz erbringt.

*Entladung des Energiespeichers 1:* Der Energiespeicher 1 soll nun weitgehend geladen sein. Beispielsweise soll sich bei einer Füllung mit reziproken Salzpaaren die Verbindung der Salzpaare (in einem reversiblen Prozess) bei der Reaktionstemperatur weitgehend geändert haben. Der Anschluss 10 könnte mit dem Rücklauf einer Bodenheizungsanlage verbunden sein und mit Wasser von ca. 20°C beaufschlagt sein. Dadurch würde sich der untere Bereich der Rohrschlange 11 abkühlen und das Dispersionsmittel dort als Kondensat auftreten. Im oberen Bereich der Rohrschlange 11 wäre dagegen die Temperatur höher, so dass hier das Dispersionsmittel verdampfen kann und in diesem Bereich einen Druck entsprechend dem Dampfdruck erzeugt. Dadurch wird wiederum eine Dispersionsmittelkreislauf in Gang gesetzt, in der Art, dass aus den Tauchrohren 15, 16 Dispersionsmittel (teilweise bereits vorgewärmt und verdampft) austritt. Beim Durchströmen des auf seiner Reaktionstemperatur liegenden Speichermediums 5 verdampft das Dispersionsmittel vollends und tritt dabei in sehr feiner Verteilung in kleinen Dampfblasen auf. Die aufsteigenden Dampfblasen bedingen eine gute Durchmischung des Speichermediums und einen guten Wärmeaustausch. Durch den Dispersionsmittelkreislauf wird ein Energietransport zum Wärmetauscher 12 (Rohrschlange 11) durchgeführt. Durch diesen direkten Wärmetausch kann der Energiespeicher 1 platzsparend gebaut werden und die für die Durchmischung des Speichermediums 5 erforderliche Bewegungsenergie wird direkt dem Speicherpotential entnommen. Der Wärmeaustausch zwischen dem Dispersionsmittel 22 und dem Wärmeträgermittel 8 findet dabei ausserhalb des eigentlichen Speicherkerns statt.

Der Energiespeicher 1 ist nur prinzipiell dargestellt und könnte beispielsweise auch eine andere Anordnung, insbesondere grössere Zahlen von Tauchrohren 15, 16 oder Standrohren 13 aufweisen. Auch die Wärmetauscheinrichtung 12 zwischen dem Dispersionsmittel 22 und dem Wärmeträgermittel 8 könnte entsprechend anderen bekannten Wärmetauscherkonstruktionen ausgeführt sein. Weiter könnten mehrere Wärmeträgermittelkreisläufe, beispielsweise ein Be- und Entladekreislauf, an den Energiespeicher 1 angeschlossen sein.

Die in Fig. 2 gezeigte zweite Ausführungsform eines Energiespeichers 23 besteht ebenfalls aus einem inneren und äusseren Behälter 24, 25, in deren Zwischenbereich 26 eine Rohrschlange 27 eingebracht ist. Die Rohrschlange 27 ist jedoch hier mit einem oberen Anschluss 28 und einem unteren Anschluss 29 am äusseren Behälter 25 verbunden und von einem Wärmeträgermittel 30 einer Versorgungsanlage, beispielsweise einer Heizungsanlage, durchströmt. Im inneren Behälter 24 ist auch hier bis zu einem Niveau 31 ein Speichermedium 32 eingefüllt. Über ein Rückschlagventil 33 hat ein Standrohr 34 im inneren Behälter 24 Verbindung mit dem Zwischenbereich 27. Die obere Öffnung des Standrohres 34 ist mit zwei von oben her in das Speichermedium 32 ragenden Tauchrohren 35 und 36 verbunden. Der Deckel des inneren Behälters ist mit Durchströmöffnungen 37, 38 zum Zwischenbereich 26 versehen. Der Zwischenbereich 26, das Standrohr 34, die Tauchrohre 35, 36 und die Durchströmöffnungen 37, 38 sind von einem Dispersionsmittel 39 durchströmt, das teilweise dampfförmig oder als Kondensat auftritt.

Die zur ersten Ausführungsform getroffenen Feststellungen zur Wahl des Speichermediums, des Dispersionsmittels, des Werkstoffs, der Druckverhältnisse und der Art der Wärmetauscher sind auch hier und entsprechend bei den weiteren Ausführungsbeispielen relevant.

Der Energiespeicher 23 hat folgende Funktion:

Ähnlich wie bei der ersten Ausführungsform tritt auch hier ein Dispersionsmittelkreislauf auf. Für die Entladung des Energiespeichers 23 soll ein Wärmeträgermittel 30, beispielsweise aus einem Heizungsrücklauf, unterhalb der Verdampfungstemperatur des Dispersionsmittels 39 am unteren Anschluss 29 zugeführt werden. Dadurch ist in diesem Bereich das Dispersionsmittel flüssig, wie es in Fig. 2 angedeutet ist. Beim Durchströmen der Rohrschlange 27 erwärmt sich das Wärmeträgermittel 30 auf seinen Weg zum Auslassanschluss 28. Dadurch kommt es über die Verdampfungstemperatur des Dispersionsmittels, so dass in der Nähe des Anschlusses 28 das Dispersionsmittel verdampft ist. Durch den hier vorherrschenden Dampfdruck wird ein Druck auf das flüssige Dispersionsmittel 39 ausgeübt, das im Standrohr 34 aufsteigt und durch die Tauchrohre 35, 36 im Speichermedium 32 austritt. Im Speichermedium 32 wird das Dispersionsmittel 39 erwärmt und verdampft. Die aufsteigenden kleinen Dampfblasen treten aus dem Speichermedium aus und durch die Durchströmöffnungen 37, 38 in den Zwischenbereich 26. Damit ist der Dispersionsmittelkreislauf geschlossen. Die zum ersten Ausführungsbeispiel gemachten Bemerkungen zur Ingangsetzung des Kreislaufs sind auch hier zu beachten. Ein entsprechender Kreislauf lässt sich auch bei der Beladung des Energiespeichers 23 erzeugen und aufrechterhalten. Für den Energietransport wesentlich ist auch hier, dass im Dispersionsmittel 39 vom Speichermedium 32 Wärme aufgenommen wird, die in Form von latenter Verdampfungswärme im Dispersionsmittel transportiert und die bei der Kondensation im Zwischenbereich 26 (in Fig. 2 durch Tröpfchenbildung angedeutet) wieder frei wird. Dadurch können bei einem relativ geringen Massenfluss an Dispersionsmittel grosse Energiemengen im Bereich der Reaktionstemperatur aufgetragen und von dem Speichermedium übertragen werden.

Exergetisch gesehen ist dieser Prozess günstiger als ein üblicher Wärmetauscher, da bis zur Reaktionstemperatur der Prozess stabil bleibt und das Angebot eines Energieabsorbers, z. B. eines Solarkollektors, bis zur Reaktionstemperatur voll angenommen wird. Das gleiche gilt für die Entladung, da das Speichermedium 32 das Dispersionsmittel 39 bis zum Erlahmen der Reaktion im Speichermedium 32 ausdampft. Die beschriebenen Nachteile anderer Methoden entfallen für beide Methoden.

Zur Leistungsregelung könnten in die verschiedenen Kreisläufe zusätzlich zu Rückschlagventilen auch Regel- und Steuerungsventile eingebaut sein. Weiter könnte in allen Ausführungsformen eine Abpumpeinrichtung für das Dispersionsmittel für den ruhenden Zustand des geladenen Speichers vorgesehen sein. Dadurch könnte der Druck im Speicherbehälter reduziert werden.

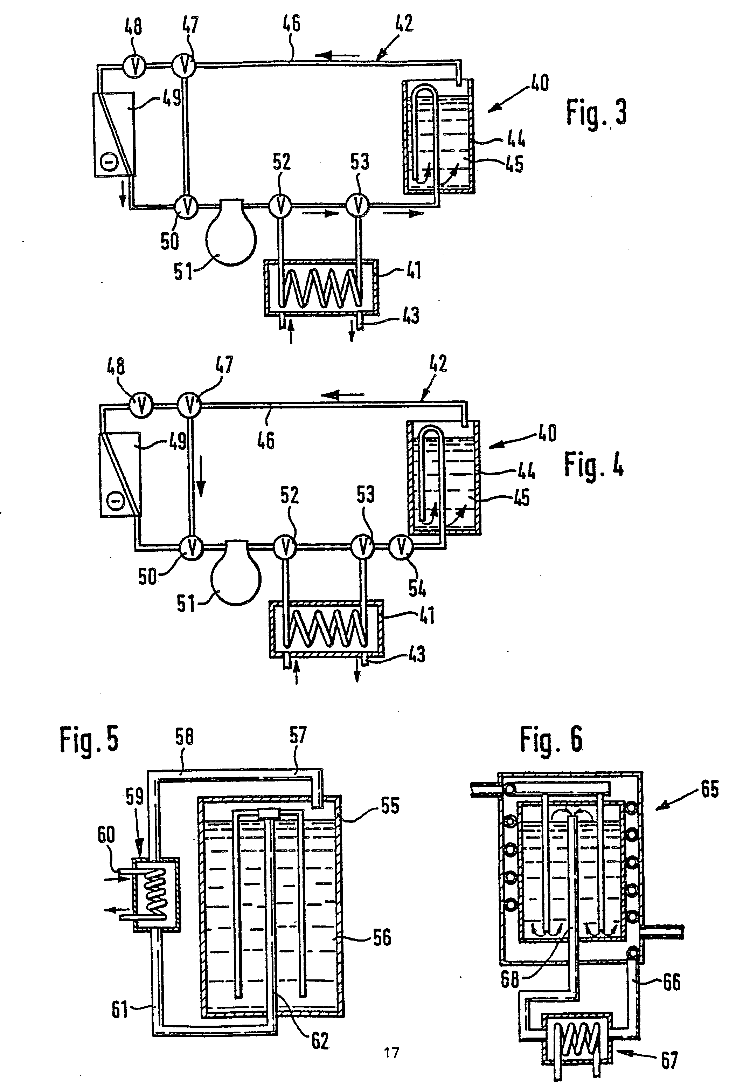

In den Fig. 3 und 4 ist eine vierte Ausführungsform eines Energiespeichers dargestellt, bei dem der Wärmetauscher 41 zwischen einem Dispersionsmittel 42 und einem Wärmeträgermittel 43 nicht unmittelbar am Energiespeicher 40 angebracht ist. In einen Behälter 44 ist ein Speichermedium 45 eingefüllt. Das Speichermedium wird vom Dispersionsmittel 42 durchströmt und in einem Kreislauf der Reihe nach durch eine obere Leitung 46, ein Dreiwegeventil 47, ein Expansionsventil 48, einen Energieabsorber 49, ein weiteres Dreiwegeventil 50, einen Kompressor 51 und zwei weitere Dreiwegeventile 52, 53 zum Energiespeicher 40 geführt. An die beiden Dreiwegeventile 52, 53 ist der Wärmetauscher 41 angeschlossen, an dem der Wärmeträgermittelkreislauf 43 angedeutet ist.

Anhand der Fig. 3 soll bei der entsprechenden Stellung der Magnetventile 47, 50, 52, 53 die Ladung des Energiespeichers 40 gezeigt werden. Vom Energiespeicher kommend strömt flüssiges Dispersionsmittel in der Leitung 46 zum Expansionsventil 48. Nach dem Expansionsventil 48 entspannt sich das Dispersionsmittel und nimmt aus dem nachgeschalteten Energieabsorber 49 Energie auf. Der Energieabsorber 49 könnte beispielsweise ein Solarkollektor oder ein anergetischer Wärmespeicher sein. Im nachfolgenden Kompressor 51 wird das Dispersionsmittel 42 komprimiert und als heisses Gas dem Energiespeicher 40 zugeführt. Hier strömt es durch das Speichermedium und gibt dabei Energie ab, die in Form von latenter Wärme im Speichermedium 45 gespeichert wird. Der Dispersionsmittelkreislauf wird hier durch den Kompressor 51 eingeleitet und aufrechterhalten.

Anhand der Fig. 4 soll nun der Entladevorgang beschrieben werden. Die Dreiwegeventile 47, 50 sind dabei so geschaltet, dass das Expansionsventil 48 und der Energieabsorber 49 abgetrennt sind und eine direkte Verbindung zwischen den Ventilen 47, 50 besteht. Weiter sind die Dreiwegeventile 52, 53 so geschaltet, dass das Dispersionsmittel 42 durch den Wärmetauscher 41 geführt wird. Der Kompressor 51 saugt aus dem Energiespeicher 40 über die Leitung 46 warmen Dispersionsmitteldampf an. Nach dem Kompressor, der hier im wesentlichen als Pumpe wirkt, tritt das Dispersionsmittel entweder flüssig oder als Heissgas, je nach Auslegung des Kreislaufs, durch den Wärmetauscher 41 und gibt dort Wärme, z. T. durch seine Abkühlung, z.T. bei der Kondensation als Verdampfungswärme, an das Wärmeträgermittel 43 ab. Beim Eintritt des Dispersionsmittels 42 in das Speichermedium 45 soll das Dispersionsmittel wieder flüssig sein, damit im Speichermedium 45 der Verdampfungsvorgang des Dispersionsmittels 42 gewährleistet ist und dadurch ein Wärmetransport im Dispersionsmittel über die Verdampfungswärme erfolgt. Um die entsprechenden physikalischen Bedingungen für die Verflüssigung des Dispersionsmittels zu erhalten, kann es notwendig werden, nach dem Wärmetauscher 41 noch ein Expansionsventil (in Fig. 4 mit Bezugszeichen 54 eingezeichnet) vorzusehen.

Der Kreislauf des Dispersionsmittels 42 wird auch hier vom Kompressor 51 aufrechterhalten. Wesentlich dabei ist, dass, ähnlich wie bei den Hilfspumpeinrichtungen der ersten beiden Ausführungsformen, nur das inerte Dispersionsmittel 42 umgepumpt werden muss und nicht das meist aggressive Speichermedium. Auch hier könnten Druckminderer zur Konstanthaltung des Druckes und Regel- oder Steuerventile zur Leistungsregelung eingesetzt sein.

Eine wesentliche Verbesserung und Ausgestaltung dieser Ausführung wird darin gesehen, dass die Be- bzw. Entladung eines Energiespeichers in direkter Kopplung mit einer Kompressionsmaschine erfolgt, die vom Dispersionsmittel durchströmt wird, wobei das Speichermedium als Kondensator bzw. als Verdampfer dient. Bei dieser Wärmepumpenanordnung entfällt ein sonst erforderlicher Wärmetauscher zwischen Wärmepumpenkreis und Speicherkreis.

Fig. 5 zeigt eine vierte Ausführungsform eines Energiespeichers, die ähnlich der in Fig. 2 gezeigten zweiten Ausführungsform aufgebaut ist. Der Wärmetauscher zwischen dem Dispersionsmittel und dem Wärmeträgermittel ist hier jedoch nicht in einem doppelwandigen Behälter untergebracht, sondern liegt extern und ist über Leitungen angeschlossen. In einen Behälter 55 ist ein Speichermedium 56 eingebracht, das von einem Dispersionsmittel 57 durchströmt wird. Das Dispersionsmittel 57 durchläuft einen Kreislauf aus dem Behälter 55 durch eine Leitung 58 zu einem nicht mit dem Behälter 55 verbundenen externen Wärmetauscher 59, an den ein Wärmeträgermittelkreislauf 60 angeschlossen ist. Vom Wärmetauscher 59 ist das Dispersionsmittel 57 in einer weiteren Leitung 61 wieder zurück zum Behälter 55 geführt und strömt von unten her in einem Standrohr 62, das sich in zwei Tauchrohre 63, 64 in das Speichermedium 56 verzweigt.

Dieser Energiespeicher funktioniert ebenso wie der in Fig. 2 gezeigte Energiespeicher 23. Die dort gemachten Ausführungen zur Ausbildung eines Dispersionsmittelkreislaufs gelten auch hier. Es kann jedoch, wie hier gezeigt, vorteilhaft sein, externe, handelsübliche oder bereits vorhandene Wärmetauscher einzusetzen.

In Fig. 6 ist ein Energiespeicher 65 dargestellt, der in seinem oberen Teil dem in Fig. 1 dargestellten Energiespeicher 1 entspricht. Der dort dargestellte Dispersionsmittelkreislauf in der Rohrschlange 11 ist jedoch hier in einer Leitung 66 nach aussen zu einem weiteren Wärmetauscher 67 geführt und von dort zurück zu einem Standrohr 68. Bei dieser fünften Ausführungsform eines Energiespeichers 65 ist somit der Dispersionsmittelkreislauf durch zwei (oder mehrere) Wärmetauscher in Kaskadenschaltung geführt, wobei die zu den Wärmetauschern gehörenden Wärmeträgermittelkreisläufe unabhängig oder miteinander verbunden sein können. Eine ähnliche Kaskadenschaltung mit integrierten oder externen Wärmetauschern kann auch bei den vorgenannten Ausführungsformen vorgenommen werden.

Zusammenfassend wird festgestellt, dass bei einem Energiespeicher zur Speicherung von latenter Wärme ein das Speichermedium durchströmendes Dispersionsmittel vorgesehen wird, das einen direkten Wärmetausch mit dem Speichermedium unter Aufnahme bzw. Abgabe latenter, im Dispersionsmittel gespeicherter Wärme, eine gute Durchmischung des Speichermediums und zudem eine kompakte und platzsparende Bauweise eines Energiespeichers ermöglicht.

**Patentansprüche**

1. Energiespeicher zur Speicherung von latenter Wärme, bei dem in einem Behälter (3, 25, 44, 55) ein chemisch reagierendes Speichermedium (5, 32, 45, 56) oder ein Speichermedium (5, 32, 45, 56) mit Phasenwechsel einer bestimmten Reaktions- bzw. Phasenumwandlungstemperatur eingebracht ist, und bei dem wenigstens ein Teil des Speichermediums (5, 32, 45, 56) von einem Wärmeträgermittel, das einem Wärmetauscher (11, 27, 41, 67, 59) zuführbar ist, bei jedem Entladen des Speichermediums durchströmbar ist, wobei das Wärmeträgermittel mit dem Speichermedium (5, 32, 45, 56) chemisch nicht reagiert und die Verdampfungstemperatur des Wärmeträgermittels kleiner oder gleich der Reaktionstemperatur des Speichermediums (5, 32, 45, 56) ist, so dass wenigstens ein Teil des Wärmetransports mit dem Wärmeträgermittel über darin latent gespeicherte Wärme erfolgt, dadurch gekennzeichnet,

a) dass zur Durchmischung des Speichermediums (5, 32, 45, 56) ein Dispersionsmittel (22, 39, 42, 57) vorgesehen ist, in dem das Speichermedium (5, 32, 45, 56) verteilt ist,

b) dass das Dispersionsmittel (22, 39, 42, 57) eine geringere Dichte aufweist als das Speichermedium (5, 32, 45, 56),

c) dass das Dispersionsmittel (22, 39, 42, 57) stets im Bodenbereich des Behälters (3, 24, 44, 55) zugeführt wird,

d) dass das Dispersionsmittel (22, 39, 42, 57) das Wärmeträgermittel ist, und

e) dass das Dispersionsmittel (22, 39, 42, 57) mit einem ausserhalb des Speichermediums (5, 32, 45, 56) angeordneten Verdampfer in Verbindung steht.

2. Energiespeicher nach Anspruch 1, dadurch gekennzeichnet, dass der Behälter (2; 24, 25; 44; 55) zur Angleichung der Reaktionstemperatur und der Verdampfungstemperatur unter Druck betreibbar ist.

3. Energiespeicher nach einem der Ansprüche 1 oder 2, dadurch gekennzeichnet, dass das Dispersionsmittel (22; 39; 42; 57) innerer oder äusserer Wärmeträger in einem Wärmetauscher (12; 27; 41; 59; 67) zwischen dem Dispersionsmittel (22; 39; 42; 57) und einem Wärmeträgermittel (8; 30; 43) einer Versorgungsanlage ist.

4. Energiespeicher nach einem der Ansprüche 1 bis 3, dadurch gekennzeichnet, dass der Behälter (2) aus einem inneren, mit Speichermedium (5) gefüllten Behälter (3) und einem äusseren, mit einem Wärmeträgermittel (8) eines Anlagenkreislaufs gefüllten Behälter (4) besteht, und dass das Dispersionsmittel (22) in einem Rohrleitungssystem geführt ist, das aus mindestens einem oben offenen Standrohr (13) im inneren Behälter (3) besteht, dessen Eintrittsöffnung (14) über dem Niveau des Speichermediums (5) liegt, der untere Teil des Standrohrs (13) mit einer Rohrschlange (11) zwischen dem äusseren und inneren Behälter (3, 4) verbunden ist und die Rohrschlange (11) in mindestens einem Tauchrohr (15, 16) endet, das von oben her in das Speichermedium (5) in den inneren Behälter (3) ragt.

5. Energiespeicher nach einem der Ansprüche 1 bis 3, dadurch gekennzeichnet, dass der Behälter aus einem inneren, mit Speichermedium (32) gefüllten Behälter (24) besteht und einem äusseren Behälter (25) besteht, dass in einem durch den inneren und äusseren Behälter (24, 25) gebildeten Zwischenraum (26) eine von einem Wärmeträgermittel (30) eines Anlagenkreislaufs durchströmte Rohrleitungsschlange (27) angebracht ist, dass mindestens ein Standrohr (34) im Speichermedium (32) vorgesehen ist, das an der Unterseite Verbindung mit dem Zwischenraum (26) hat und an der Oberseite mit mindestens einem Tauchrohr (35, 36) verbunden ist, das von oben her in das Speichermedium (32) ragt, dass der innere Behälter (24) an seiner Oberseite über dem Niveau des Speichermediums (32) Bohrungen (37, 38) zum Zwischenraum (26) aufweist, und dass sich im Zwischenraum (26) Dispersionsmittel (39) befindet.

6. Energiespeicher nach einem der Ansprüche 1 bis 5, dadurch gekennzeichnet, dass in den von Dispersionsmittel (22; 39; 42; 57) durchströmten Leitungen oder Bohrungen Leistungsregulierventile und/oder Rückschlagventile (20, 21; 33) eingebaut sind.

7. Energiespeicher nach einem der Ansprüche 1 bis 6, dadurch gekennzeichnet, dass eine Abpumpeinrichtung für Kondensat oder Dampf des Dispersionsmittels (22; 39; 42; 57) vorgesehen ist.

8. Energiespeicher nach einem der Ansprüche 1 bis 7, dadurch gekennzeichnet, dass eine Umpumpeinrichtung für das Dispersionsmittel (22; 39; 42; 57) vorgesehen ist.

9. Energiespeicher nach einem der Ansprüche 1 bis 3, dadurch gekennzeichnet, dass das Speichermedium (5; 32; 45; 56) in einem an den Energiespeicher angeschlossenen Wärme/Kraft-Kreislauf als Kondensator bzw. Verdampfer eingesetzt ist.

10. Energiespeicher nach Anspruch 9, dadurch gekennzeichnet, dass an den Energiespeicher (1; 23; 40; 65) zur Speicherladung ein Energieabsorber (49) anschliessbar ist, dass zwischen dem Energieabsorber (49) und dem Dispersionsmittelauslauf ein Expansionsventil (48) angeordnet ist, und dass zwischen dem Energieabsorber (49) und dem Dispersionsmittelzulauf ein Kompressor (51) angeordnet ist.

11. Energiespeicher nach einem der Ansprüche 9 oder 10, dadurch gekennzeichnet, dass an den Energiespeicher (1; 23; 40; 65) zur Speicherentladung ein Kompressor (51) und diesem nachgeschaltet ein Wärmetauscher (41) zwischen dem Dispersionsmittel (42) und dem Wärmeträgermittel (43) eines Anlagenkreislaufs anschliessbar ist.

12. Energiespeicher nach einem der Ansprüche 1 bis 11, dadurch gekennzeichnet, dass der Wärmetauscher (59, 67) getrennt und im Abstand vom Behälter (2; 24; 25; 44; 55) angeordnet ist.

13. Energiespeicher nach einem der Ansprüche 1 bis 12, dadurch gekennzeichnet, dass mehrere Wärmetauscher (12; 27; 41; 59; 67) hintereinandergeschaltet sind.

14. Energiespeicher nach einem der Ansprüche 1 bis 13, dadurch gekennzeichnet, dass in Modulbauweise eine Mehrzahl von gleichen oder unterschiedlichen Speichereinheiten mit gleichen oder unterschiedlichen Speichermedien zusammengeschaltet ist.

## Claims

1. Energy store for storing latent heat, in which a chemically reacting storage medium (5, 32, 45, 56) or a storage medium (5, 32, 45, 56) with a phase change at a defined reaction temperature or phase transformation temperature has been introduced into a container (3, 25, 44, 55), and in which a heat transfer means which can be fed to a heat exchanger (11, 27, 41, 67, 59) can flow through at least a part of the storage medium (5, 32, 45, 56) during each discharge of the storage medium, the heat transfer means being chemically non-reactive with the storage medium (5, 32, 45, 56) and the vaporisation temperature of the heat transfer means being smaller than or equal to the reaction temperature of the storage medium (5, 32, 45, 56), so that at least a part of the heat transport by the heat transfer means takes place by means of latent heat stored therein, characterised in that:

(a) for mixing the storage medium (5, 32, 45, 56), a dispersing agent (22, 39, 42, 57) is provided in which the storage medium (5, 32, 45, 56) is distributed,

(b) the dispersing agent (22, 39, 42, 57) has a lower density than the storage medium (5, 32, 45, 56),

(c) the dispersing agent (22, 39, 42, 57) is always fed in the bottom region of the container (3, 24, 44, 55),

(d) the dispersing agent (22, 39, 42, 57) is the heat transfer means, and

(e) the dispersing agent (22, 39, 42, 57) is connected to a vaporiser located outside the storage medium (5, 32, 45, 56).

2. Energy store according to Claim 1, characterised in that the container (2; 24; 25; 44; 55) can be operated under pressure for matching the reaction temperature with the vaporisation temperature.

3. Energy store according to Claim 1 or 2, characterised in that the dispersing agent (22; 39; 42; 57) is an inner or outer heat carrier in a heat exchanger (12; 27; 41; 59; 67) between the dispersing agent (22; 39; 42; 57) and a heat transfer means (8; 30; 43) of a supply installation.

4. Energy store according to one of Claims 1 to 3, characterised in that the container (2) consists of an inner container (3) filled with storage medium (5) and an outer container (4) filled with a heat transfer means (8) of an installation circulation, and in that the dispersing agent (22) flows in a piping system which consists of at least one standpipe (13) in the inner container (3), which standpipe is open at the top and the inlet opening (14) of which is located above the level of the storage medium (5), the lower part of the standpipe (13) being connected to a pipe coil (11) between the outer and inner containers (3, 4) and the pipe coil (11) ending in at least one dip pipe (15, 16) which protrudes from above into the storage medium (5) in the inner container (3).

5. Energy store according to one of Claims 1 to 3, characterised in that the container consists of an inner container (24) filled with storage medium (32) and of an outer container (25), in that a pipe coil (27), through which a heat transfer means (30) of an installation circulation flows, is fitted in an interspace (26) formed by the inner and outer containers (24, 25), in that at least one standpipe (34) is provided in the storage medium (32), which standpipe is connected on the underside to the interspace (26) and on the upper side to at least one dip pipe (35, 36) which protrudes from above into the storage medium (32), in that the inner container (24) has perforations (37, 38), leading to the interspace (26), on its upper side above the level of the storage medium (32), and in that dispersing agent (39) is present in the interspace (26).

6. Energy store according to one of Claims 1 to 5, characterised in that capacity-reducing valves and/or non-return valves (20, 21; 33) are installed in the lines or perforations carrying a flow of dispersing agent (22; 39; 42; 57).

7. Energy store according to one of Claims 1 to 6, characterised in that a pumping-out device for condensate or vapour of the dispersing agent (22; 39; 42; 57) is provided.

8. Energy store according to one of Claims 1 to 7, characterised in that a circulation pump device for the dispersing agent (22; 39; 42; 57) is provided.

9. Energy store according to one of Claims 1 to 3, characterised in that the storage medium (5; 32; 45; 56) is inserted as a condenser or vaporiser into a heat/power circulation connected to the energy store.

10. Energy store according to Claim 9, characterised in that an energy absorber (49) can be connected to the energy store (1; 23;. 40; 65) for charging the store, in that an expansion valve (48) is provided between the energy absorber (49) and the dispersing agent outlet, and in that a compressor (51) is provided between the energy absorber (49) and the dispersing agent inlet.

11. Energy store according to Claim 9 or 10, characterised in that, for discharging the store, a compressor (51) can be connected to the energy store (1; 23; 40; 65) and, downstream of the compressor, a heat exchanger (41) can be connected between the dispersing agent (42) and the heat transfer means (43) of an installation circulation.

12. Energy store according to one of Claims 1 to 11, characterised in that the heat exchanger (59, 67) is arranged separately and at a distance from the container.(2; 24; 25; 44; 55).

13. Energy store according to one of Claims 1 to 12, characterised in that several heat exchangers (12; 27; 41; 59; 67) are arranged in series.

14. Energy store according to one of Claims 1 to 13, characterised in that a plurality of identical or different storage units with identical or different storage media are interconnected in modular construction.

## Revendications

1. Accumulateur d'énergie pour accumuler de la chaleur latente, dans lequel un milieu accumulateur (5, 32, 45, 56) qui réagit chimiquement ou un milieu accumulateur (5, 32, 45, 56) qui subit un changement de phase à une température de réaction ou de transition de phase déterminée a été introduit dans un récipient (3, 25, 44, 55), et dans lequel au moins une partie du milieu accumulateur (5, 32, 45, 56) peut être traversée à chaque décharge du milieu accumulateur par un agent caloporteur pouvant être amené à un échangeur de chaleur (11, 27, 41, 67, 59), l'agent caloporteur ne réagissant pas chimiquement avec le milieu accumulateur (5, 32, 45, 56) et la température d'évaporation de l'agent caloporteur étant inférieure ou égale à la température de réaction du milieu accumulateur (5, 32, 45, 56), de sorte qu'une partie au moins du transport de chaleur par l'agent caloporteur consiste en un transport de chaleur latente accumulée dans l'agent caloporteur, caractérisé en ce que:

a) un dispersant (22, 39, 42, 57) pour le brassage du milieu accumulateur (5, 32, 45, 56) est distribué dans le milieu accumulateur (5, 32, 45, 56),

b) le dispersant (22, 39, 42, 57) a une plus faible masse volumique que le milieu accumulateur (5, 32, 45, 56),

c) le dispersant (22, 39, 42, 57) est toujours introduit dans la région du fond du récipient (3, 24, 44, 55),

d) le dispersant (22, 39, 42, 57) est l'agent caloporteur, et

e) le dispersant (22, 39, 42, 57) communique avec un évaporateur disposé à l'extérieur du milieu accumulateur (5, 32, 45, 56).

2. Accumulateur d'énergie selon la revendication 1, caractérisé en ce que le récipient (2; 24; 25; 44; 55) peut fonctionner sous pression en vue de l'égalisation de la température de réaction et de la température d'évaporation.

3. Accumulateur d'énergie selon l'une des revendications 1 ou 2, caractérisé en ce que le dispersant (22; 39; 42; 57) est le caloporteur intérieur ou extérieur dans un échangeur de chaleur (12; 27; 41; 59; 67) entre le dispersant (22; 39; 42; 57) et un agent caloporteur (8; 30; 43) d'une installation d'alimentation.

4. Accumulateur d'énergie selon l'une des revendications 1 à 3, caractérisé en ce que le récipient (2) est constitué d'un récipient intérieur (3) rempli de milieu accumulateur (5) et d'un récipient extérieur (4) rempli d'un agent caloporteur (8) d'un circuit fermé d'une installation, et en ce que le dispersant (22) est guidé dans un système de conduites comprenant au moins un tube vertical (13) ouvert en haut, qui est disposé dans le récipient intérieur (3) et dont l'ouverture d'entrée (14) est située au-dessus du niveau du milieu accumulateur (5), la partie inférieure du tube vertical (13) étant reliée à un serpentin (11) disposé entre les récipients extérieur et intérieur (3, 4) et le serpentin (11) se terminant dans au moins un tube plongeur (15, 16) qui s'étend d'en haut dans le milieu accumulateur (5) contenu dans le récipient intérieur (3).

5. Accumulateur d'énergie selon l'une des revendications 1 à 3, caractérisé en ce que le récipient est constitué d'un récipient intérieur (24) rempli de milieu accumulateur (32) et d'un récipient extérieur (25), en ce qu'un serpentin (27), traversé par un agent caloporteur (30) d'un circuit fermé d'une installation, est disposé dans un espace intermédiaire (26) formé par les récipients intérieur et extérieur (24, 25), en ce que le milieu accumulateur (32) contient au moins un tube vertical (34) qui communique en bas avec l'espace intermédiaire (26) et est relié en haut à au moins un tube plongeur (35, 36) qui s'étend d'en haut dans le milieu accumulateur (32), en ce que le récipient intérieur (24) présente en haut, au-dessus du niveau du milieu accumulateur (32), des perçages (37, 38) établissant une communication avec l'espace intermédiaire (26), et en ce que l'espace intermédiaire (26) contient du dispersant (39).

6. Accumulateur d'énergie selon l'une des revendications 1 à 5, caractérisé en ce que des soupapes de régulation de la puissance et/ou des soupapes antiretour (20, 21; 33) sont incorporées dans les conduites ou les perçages traversés par le dispersant (22; 39; 42; 57).

7. Accumulateur d'énergie selon l'une des revendications 1 à 6, caractérisé en ce qu'il comprend un dispositif de pompage pour l'évacuation de condensat ou de vapeur du dispersant (22; 39; 42; 57).

8. Accumulateur d'énergie selon l'une des revendications 1 à 7, caractérisé en ce qu'il comprend un dispositif de pompage pour le recyclage du dispersant (22; 39; 42; 57).

9. Accumulateur d'énergie selon l'une des revendications 1 à 3, caractérisé en ce que le milieu accumulateur (5; 32; 45; 56) est utilisé comme condensateur ou évaporateur dans un circuit fermé de chaleur et/ou de force raccordé à l'accumulateur d'énergie.

10. Accumulateur d'énergie selon la revendication 9, caractérisé en ce qu'un absorbeur d'énergie (49) peut être raccordé à l'accumulateur d'énergie (1; 23; 40; 65) en vue de la charge de l'accumulateur, en ce qu'une soupape de détente (48) est installée entre l'absorbeur d'énergie (49) et la sortie du dispersant, et en ce qu'un compresseur (51) est installé entre l'absorbeur d'énergie (49) et l'arrivée de dispersant.

11. Accumulateur d'énergie selon l'une des revendications 9 ou 10, caractérisé en ce qu'un compresseur (51) peut être raccordé à l'accumulateur d'énergie (1; 23; 40; 65) en vue de la charge de l'accumulateur et en ce que le compresseur peut être suivi d'un échangeur de chaleur (41) destiné à l'échange de chaleur entre le dispersant (42) et l'agent caloporteur (43) et faisant partie d'un circuit fermé d'une installation.

12. Accumulateur d'énergie selon l'une des revendications 1 à 11, caractérisé en ce que l'échangeur de chaleur (59, 67) est disposé séparément et à distance du récipient (2; 24; 25; 44; 55).

13. Accumulateur d'énergie selon l'une des revendications 1 à 12, caractérisé en ce que plusieurs échangeurs de chaleur (12; 27; 41; 59; 67) sont montés l'un derrière l'autre.

14. Accumulateur d'énergie selon l'une des revendications 1 à 13, caractérisé en ce que plusieurs unités d'accumulation identiques ou différentes, contenant le même milieu accumulateur ou des milieux accumulateurs différents, sont raccordées entre elles dans une construction modulaire.

0 079 452

Fig. 1

Fig. 2

15

Fig. 3

Fig. 4

Fig. 5

Fig. 6

17